(19) Europäisches Patentamt
European Patent Office
Office européen des brevets

(11) **EP 2 318 155 B1**

(12) **FASCICULE DE BREVET EUROPEEN**

(45) Date de publication et mention
de la délivrance du brevet:
**30.11.2011 Bulletin 2011/48**

(21) Numéro de dépôt: **09794081.1**

(22) Date de dépôt: **24.06.2009**

(51) Int Cl.:
***B08B 3/08*** *(2006.01)*

(86) Numéro de dépôt international:
**PCT/IB2009/052704**

(87) Numéro de publication internationale:
**WO 2010/004465 (14.01.2010 Gazette 2010/02)**

(54) **PROCÉDÉ DE DÉSINFECTION D'UN OUVRAGE DE FILTRATION POUR PRETRAITEMENT D'EAU SALÉE, ET INSTALLATION POUR SA MISE EN OEUVRE**

VERFAHREN ZUR DESINFEKTION EINER FILTRIERUNG ZUR VORBEHANDLUNG VON SALZWASSER UND ANLAGE ZUR UMSETZUNG DES VERFAHRENS

PROCESS FOR DISINFECTING A FILTRATION WORKS FOR PRETREATMENT OF SALTWATER, AND INSTALLATION FOR THE IMPLEMENTATION THEREOF

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **26.06.2008 FR 0803591**

(43) Date de publication de la demande:
**11.05.2011 Bulletin 2011/19**

(73) Titulaire: **DEGREMONT**
**92500 Rueil-Malmaison (FR)**

(72) Inventeur: **BONNELYE, Véronique**
**F-78700 Conflans Sainte-Honorine (FR)**

(74) Mandataire: **Michardière, Bernard**
**Cabinet Armengaud Aîné**
**3, Avenue Bugeaud**
**75116 Paris (FR)**

(56) Documents cités:
**EP-A- 1 710 210          EP-A- 1 914 014**
**FR-A- 2 891 540          US-A1- 2004 050 800**
**US-A1- 2006 254 624**

**Description**

L'invention est relative à un procédé de désinfection d'un ouvrage de filtration pour prétraitement d'eau salée, en particulier d'eau de mer, en amont d'une unité de dessalement d'eau avec membrane d'osmose inverse, procédé du genre de ceux dans lesquels une opération de désinfection de l'ouvrage de filtration est effectuée périodiquement par addition d'un agent bactéricide à l'eau à prétraiter, l'ouvrage de filtration étant soumis périodiquement à un décolmatage.

EP-A-1 914 014 concerne un procédé de ce genre.

L'agent bactéricide est généralement constitué par un oxydant, en particulier du chlore, ou du dioxyde de chlore.

L'invention a pour but, surtout, de mettre en place une solution à la problématique de la désinfection des ouvrages de prétraitement en amont d'une osmose inverse, ceci afin de limiter le biofouling (ou salissures biologiques) des membranes d'osmose inverse, lié à la colonisation de ces membranes par un biofilm.

L'application des procédés d'osmose inverse sur eau de mer nécessite la mise en oeuvre d'un prétraitement pour protéger les membranes d'osmose du colmatage. Le colmatage peut être lié à la présence dans l'eau d'alimentation de particules ou de matière dissoute, minérale ou organique. Le colmatage des membranes d'osmose inverse peut être lié aussi au développement d'un biofilm sur la membrane elle-même ou sur l'espaceur, composant constituant du module d'osmose inverse permettant de maintenir des conditions hydrauliques optimales.

Ces prétraitements consistent généralement en une étape de filtration, sur media granulaire ou membranaire, associée ou non à une pré-coagulation des particules et de la matière organique pour favoriser leur séparation.

L'eau de mer étant un milieu riche en micro-organismes, son passage dans les ouvrages de prétraitement, conduites d'amenée d'eau brute, ouvrages de filtration peut conduire à la colonisation des surfaces par du biofilm. Ce biofilm est une source d'ensemencement de l'eau, conduit à des relargages de matière organique sous-produit du métabolisme des micro-organismes constituant le biofilm, et peut, par le détachement de certaines parties de ce biofilm, enrichir à nouveau l'eau prétraitée en particules pouvant colmater les membranes d'osmose inverse.

Afin de limiter ce phénomène de colonisation des ouvrages, une désinfection est généralement réalisée, mettant en oeuvre un bactéricide, généralement un oxydant tel que le chlore, le dioxyde de chlore ou les chloramines. Dans une grande majorité d'ouvrages marins, essentiellement pour l'alimentation d'usines de production d'électricité ou de dessalement par des procédés de distillation, les ouvrages de prise d'eau sont protégés de la colonisation des microorganismes par l'ajout en continu de l'un de ces oxydants. Cette désinfection en continu est souvent renforcée par des chlorations chocs mettant en oeuvre un résiduel de désinfectant plus élevé de façon périodique et aléatoire pour tuer les organismes plus évolués tels que les mollusques.

Le principal désavantage de cette technique de chloration en continu est la formation de carbone organique dissous plus facilement assimilable par les micro-organismes à partir du carbone organique déjà présent dans l'eau de mer ou saumâtre. En amont du traitement par osmose inverse, le résiduel bactéricide est généralement neutralisé pour protéger les membranes d'un contact avec un oxydant puissant: les micro-organismes peuvent donc se développer à la surface des membranes en présence de carbone organique biodégradable, et ce d'autant plus que la concentration en nutriment est élevée. La désinfection en continu par emploi d'un oxydant agit donc comme un promoteur du développement du biofilm sur les membranes d'osmose inverse, et donc de leur colmatage.

Pour faire face à cette difficulté de réaliser une désinfection efficace des ouvrages de prétraitement et notamment des filtres, selon l'invention, un procédé de désinfection du genre défini précédemment est caractérisé en ce que :

- l'opération de désinfection de l'ouvrage de filtration est effectuée pendant un décolmatage,
- et le liquide utilisé pour le décolmatage est formé par une solution aqueuse de décolmatage dont la teneur en sel est différente de la teneur de l'eau à prétraiter, et l'agent bactéricide est ajouté à la solution de décolmatage en amont de son injection dans l'ouvrage de filtration.

La solution aqueuse de décolmatage peut présenter une teneur en sel supérieure à celle de l'eau à traiter ; cette solution aqueuse de décolmatage est avantageusement formée par le rejet, ou concentrat, de l'osmose inverse.

Le décolmatage du filtre peut aussi être réalisé avec une solution aqueuse dont la teneur en sel est inférieure à la teneur de l'eau à prétraiter.

La filtration pour le prétraitement peut être réalisée dans un filtre à matériaux granulaires, notamment bicouche ; le décolmatage correspond alors à une opération de lavage de l'ouvrage de filtration.

La filtration pour le prétraitement peut être réalisée dans une unité à membrane, auquel cas le décolmatage correspond à une opération de rétrolavage.

De préférence, l'agent bactéricide est choisi parmi le chlore, le dioxyde de chlore ou les chloramines.

Le procédé est ainsi basé sur une désinfection en mode de lavage ou de rétrolavage, par combinaison de l'action d'un désinfectant et d'un choc osmotique créé par la solution aqueuse de décolmatage à teneur en sel différente.

L'invention consiste également en une installation, pour la mise en oeuvre d'un procédé tel que défini précédemment, qui comporte un ouvrage de filtration pour un prétraitement d'eau salée, en particulier d'eau de mer, et une unité de dessalement d'eau avec membrane d'osmose inverse située en aval de l'ouvrage de filtration, laquelle installation comporte un ensemble de conduites et de vannes pour effectuer périodiquement une opération de décolmatage de l'ouvrage de filtration, cette installation étant caractérisée en ce que :

- elle comporte un moyen pour introduire, comme liquide de lavage lors du décolmatage, une solution aqueuse dont la teneur en sel est différente de celle de l'eau à prétraiter,
- et un moyen d'injection d'agent bactéricide dans le liquide de lavage avant son injection dans l'ouvrage de filtration.

De préférence, l'installation comporte une conduite de liaison entre le rejet de l'unité d'osmose inverse et l'ouvrage de filtration, pour l'injection d'une solution de lavage plus concentrée en sel que l'eau à prétraiter.

L'ouvrage de filtration pour le prétraitement peut être constitué d'un filtre à matériaux granulaires, notamment bicouche , ou d'une unité à membrane. L'unité à membrane peut être à membrane immergée, ou à membrane en carter pressurisé.

Cette technique présente plusieurs avantages dans son principe de couplage et dans sa mise en oeuvre.

L'emploi d'un choc osmotique à base de rejet de l'osmose inverse permet de réduire les pertes en eau de l'installation en utilisant un fluide disponible en continu à des débits importants pour réaliser une action de lavage.

Le couplage d'un agent bactéricide tel que le chlore, le DBNPA (Dibromonitrilopropionamide) ou le dioxyde de chlore à un choc osmotique à base d'une solution hypersaline permet d'augmenter de façon surprenante l'efficacité du nettoyage : les inventeurs pensent que cette augmentation d'efficacité est liée à une augmentation de l'efficacité de diffusion des réactifs bactéricides au sein du biofilm. En effet, l'action d'osmose directe liée à l'introduction d'une solution hypersaline associée à l'agent bactéricide dans une solution de moindre salinité entraîne une diffusion accélérée de l'agent bactéricide. En outre, l'action combinée de l'effet d'osmose directe et de l'agent bactéricide sur les cellules bactériennes entraîne une diminution du CT (concentration C de l'agent bactéricide x T = temps de contact) nécessaire pour la désinfection des ouvrages.

La mise en oeuvre de ce nouveau dispositif ou système de désinfection des ouvrages est réalisée durant l'étape de décolmatage périodique du filtre, lavage à l'eau des filtres à medias granulaires ou rétrolavage des systèmes de filtration membranaire. Cela permet d'éviter que l'eau ayant été mise en contact avec l'agent bactéricide, et donc contenant une concentration plus élevée de carbone organique biodégradable, ne soit envoyée sur le système d'osmose inverse. Le temps de contact entre la solution hypersaline bactéricide associée à l'agent bactéricide et le milieu à désinfecter, media granulaire d'un filtre à sable ou multicouche, ou à une membrane de filtration, micro, ultra ou hyperfiltration est ajustable en fonction de l'état de contamination du système, par aménagement d'un simple temps d'attente, pause en cours de rinçage.

L'injection de l'agent bactéricide peut être arrêtée avant la fin du rinçage. Le système peut être finalement rincé avec de l'eau filtrée ou ultrafiltrée pour éliminer la solution hypersaline. C'est principalement le cas pour l'application à des systèmes de filtration sur membrane qui ne nécessitent pas de phase de maturation avant remise en production vers l'osmose inverse. Pour les systèmes à matériaux granulaires, une phase de maturation par mise à l'égout est généralement réalisée afin d'éliminer les premières eaux pouvant contenir un excès de particules, turbidité, résiduel d'oxydant ou de biocide, excès de salinité et de produit d'oxydation du biofilm.

L'invention consiste, mises à part les dispositions exposées ci-dessus, en un certain nombre d'autres dispositions dont il sera plus explicitement question ci-après à propos d'exemples de réalisation décrits avec références au dessin annexé, mais qui ne sont nullement limitatifs. Sur ce dessin :

- Fig. 1 est un schéma d'une installation mettant en oeuvre le procédé de l'invention, avec un ouvrage fermé de filtration à matériaux granulaires.
- Fig. 2 est une coupe schématique d'un ouvrage de filtration ouvert, constituant une variante possible de l'ouvrage de filtration de Fig. 1.

- Fig. 3 est un schéma simplifié d'une installation mettant en oeuvre le procédé de l'invention avec un ouvrage de filtration constitué par des membranes immergées, et
- Fig. 4 montre une variante de l'unité de filtration de Fig. 3 avec membrane en carter pressurisé.

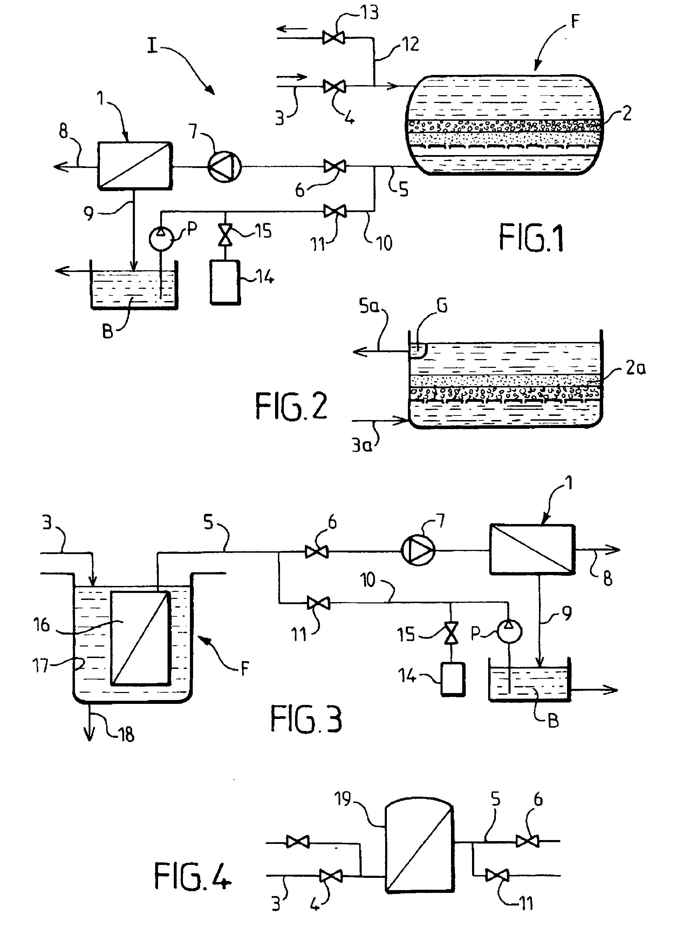

En se reportant à Fig. 1 du dessin, on peut voir une installation I de dessalement d'eau, en particulier d'eau de mer, qui comporte une unité 1 de dessalement d'eau avec membrane d'osmose inverse et, en amont de cette unité, un ouvrage de filtration F pour prétraitement de l'eau salée.

Selon l'exemple de Fig. 1, l'ouvrage de filtration F est constitué par un filtre 2 à matériaux granulaires, notamment bicouche, en carter pressurisé. L'eau à traiter arrive dans le filtre 2, en partie supérieure selon Fig. 1, par une conduite 3 équipée d'une vanne 4. L'eau prétraitée sort du filtre 2, en partie basse, par une conduite 5 reliée par l'intermediaire d'une vanne 6 à l'admission d'une pompe 7. L'eau prétraitée est envoyée sous pression par la pompe 7 dans l'unité 1 d'osmose inverse. L'eau traitée dessalée sort de l'unité 1 par une conduite 8. Le rejet de l'unité 1, constitué par une eau à forte concentration en sel, également appelée solution hypersaline, sort par une conduite 9 pour aller dans un bac B formant réserve, muni d'une évacuation de trop plein en partie haute.

Pour une opération périodique de décolmatage du filtre 2, l'installation comporte une conduite 10 pour l'injection dans le filtre 2 d'un liquide de lavage. La conduite 10 est reliée à la sortie d'une pompe P par l'intermediaire d'une vanne 11. L'admission de la pompe P est reliée au bac B pour le pompage du rejet. L'évacuation du liquide de lavage est assurée par une conduite 12, branchée sur la conduite 3 entre la vanne 4 et le filtre 2. Cette conduite 12 est équipée d'une vanne 13.

L'installation comporte en outre un moyen d'injection 14 d'un agent bactéricide dans le liquide de lavage avant son injection dans le filtre 2. Le moyen 14 peut être constitué par une pompe ou par un doseur à cylindre et piston. Le moyen d'injection 14 est relié, par l'intermediaire d'une vanne 15, à la partie de conduite 10 comprise entre la vanne 11 et la pompe P.

Le fonctionnement de l'installation 1 est le suivant.

En période normale de dessalement par osmose inverse, les vannes 4 et 6 sont ouvertes, tandis que les vannes 11, 13 et 15 sont fermées. L'eau à traiter arrive par la conduite 3 et entre dans le filtre 2 pour subir un prétraitement. L'eau prétraitée sort par la conduite 5 et est envoyée, sous pression, par la pompe 7 dans l'unité d'osmose inverse 1. L'eau traitée dessalée sort par la conduite 8, tandis que le rejet sort par la conduite 9.

Lorsqu'une désinfection du filtre 2 est jugée nécessaire, l'opération de désinfection est effectuée pendant un décolmatage du filtre 2. La pompe 7 est arrêtée, tandis que la pompe P est mise en action. Le liquide de lavage utilisé pour le décolmatage est ainsi formé par le rejet de l'unité d'osmose inverse dont la teneur en sel est différente de (à savoir supérieure à) la teneur de l'eau à prétraiter. L'agent bactéricide est ajouté à la solution de décolmatage, par ouverture de la vanne 15 et mise en action du moyen d'injection 14. L'agent bactéricide est avantageusement constitué par du chlore ou du dioxyde de chlore, ou des chloramines. La solution de lavage est évacuée par la conduite 12 dont la vanne 13 est ouverte.

En variante, le décolmatage du filtre 2 pourrait être réalisé avec une solution aqueuse dont la teneur en sel serait inférieure à la teneur de l'eau à prétraiter.

Le couplage d'un agent bactéricide, tel que le chlore ou le dioxyde de chlore, au choc osmotique créé par le liquide de lavage dont la concentration en sel est différente de la concentration de l'eau à prétraiter, permet d'augmenter de façon surprenante l'efficacité du nettoyage et de la désinfection : cette augmentation d'efficacité apparaît liée à une augmentation de l'efficacité de diffusion des réactifs bactéricides au sein du biofilm. En outre, l'action combinée de l'effet d'osmose directe et de l'agent bactéricide sur les cellules bactériennes entraîne une diminution du CT nécessaire pour la désinfection des ouvrages.

Fig. 2 illustre une variante de filtre ouvert 2a à matériaux granulaires qui pourrait être utilisé à la place du filtre 2 de Fig. 1. L'arrivée de l'eau à prétraiter s'effectue en partie basse du filtre 2a par la conduite 3a. La sortie de l'eau prétraitée s'effectue par une conduite 5a en partie supérieure en liaison avec une goulotte G de récupération de l'eau prétraitée.

Fig. 3 montre une installation dans laquelle le système de filtration de prétraitement est assuré par une unité à membrane 16 immergée dans un bassin 17. Les autres éléments de l'installation semblables à ceux déjà décrits à propos de Fig. 1 sont désignés par les mêmes références numériques, sans que leur description soit reprise.

Le perméat de l'unité 16 constitue l'eau préfiltrée récupérée par la conduite 5. Une évacuation 18 est prévue en partie inférieure du bassin 17 pour évacuer le concentrat de l'unité 16.

L'opération de désinfection de l'unité à membrane 16 est effectuée lors d'un rétrolavage de la membrane avec le liquide de rejet de l'unité d'osmose inverse 1, et injection de l'agent bactéricide 14 dans ce liquide de rétrolavage.

Lors de cette opération de désinfection, la pompe 7 est arrêtée, la vanne 6 est fermée, tandis que les vannes 11 et 15 sont ouvertes. La pompe P est mise en action pour assurer le rétrolavage de la membrane 16 par du liquide de rejet dans lequel l'agent bactéricide est injecté par le moyen 14.

Fig. 4 montre une variante de système de filtration par membrane selon laquelle l'unité à membrane, au lieu d'être immergée dans un bassin, forme un système en carter pressurisé 19.

Des exemples de mise en oeuvre de l'invention sont fournis maintenant.

## Exemple 1 : Application à un filtre à media granulaire (schéma de Fig.1)

La désinfection simultanée a été mise en oeuvre sur un prototype avec filtre à matériaux granulaires constitué de deux couches, conformément à la demande de brevet français n° 06 11376 déposée le 26 décembre 2006 au nom de la même société déposante. Les medias mis en oeuvre étaient une couche d'anthracite au-dessus d'une couche de sable.

Le filtre était alimenté en eau de mer préalablement coagulée par ajout de chlorure ferrique (3 mg/L de $FeCl_3$)

et soumis à une acidification par ajout d'acide sulfurique pour abaisser le pH à la valeur optimale de coagulation de cette eau, qui était dans ce cas de 6.8.

La vitesse de filtration appliquée était de 12 m$^3$/m$^2$/h sur la surface du media. La durée des cycles de filtration permettant d'atteindre un colmatage du lit filtrant de 3,4 m de colonne d'eau était de 22,5 h. Le lavage périodique du filtre était réalisé conformément au procédé décrit dans la demande de brevet français n° 06 11376. Durant la phase de rinçage à l'eau seule, réalisée à partir d'une solution hypersaline constituée du concentrat d'un système d'osmose inverse, un désinfectant, du chlore, était injecté à une concentration de 10mg/L pendant 10 minutes chaque jour. Le CT était donc de $10 \times 10 \times 7 = 700$ min.mg/L par semaine.

Un suivi de la concentration en bactéries dans l'eau d'alimentation du filtre, dans l'eau filtrée, ainsi que dans le biofilm collecté dans le filtre a été réalisé dans différentes conditions de fonctionnement :

- A : lavage périodique du filtre avec de l'eau filtrée
- B : lavage périodique du filtre avec de l'eau filtrée additionnée d'un agent bactéricide, en l'occurrence du chlore à une concentration de 10 mg/L en chlore actif
- C : lavage périodique du filtre avec du concentrat d'osmose inverse à une concentration de 75 g/L en salinité totale
- D : lavage périodique du filtre avec du concentrat d'osmose inverse à une concentration de 75 g/L en salinité totale additionnée d'un agent bactéricide, en l'occurrence du chlore à une concentration de 10 mg/L en chlore actif.
- E : lavage périodique du filtre avec du concentrat d'osmose inverse à une concentration de 75 g/L en salinité totale additionnée d'un agent bactéricide, en l'occurrence du chlore à une concentration de 5 mg/L en chlore actif. Dans ce cas, l'ajout de l'agent bactéricide est limité à 5 min sur les 10 min de durée totale de rinçage.

Le Tableau 1 présente les résultats obtenus (résultats moyens sur une période de test d'une semaine pour chaque période) avec UFC = unités formant colonies.

Tableau 1 : Dénombrement de la flore totale.

| | | Eau d'alimentation UFC/mL | Eau filtrée UFC/mL | Biofilm résiduel avant lavage périodique UFC/g de biofilm |
|---|---|---|---|---|
| | A | 10$^2$ | 10$^3$ | 5. 10$^6$ |
| | B | 2.10$^2$ | 50 | 6. 10$^3$ |
| | C | 1.5 .10$^2$ | 1.5 .10$^2$ | 3.4. 10$^4$ |
| | D | 2.1.10$^2$ | 5 | 2. 10$^2$ |
| | E | 2.10$^2$ | 5 | 5.10$^2$ |
| | A' | 5.10$^2$ | 8.10$^3$ | 4. 10$^6$ |

Il est observé durant le cas A une contamination du media filtrant par développement d'un biofilm. La qualité bactériologique de l'eau filtrée est dégradée par rapport à l'eau à filtrer du fait du relargage de bactéries libres et de fractions de biofilm.

Les cas B et C mettent en oeuvre un ajout d'un agent bactéricide dans la solution de lavage du filtre ou l'emploi d'une solution hypersaline pour laver le filtre, ce qui permet de diminuer le relargage de bactéries dans l'eau filtrée ainsi que la concentration en micro-organismes dans le biofilm présent à la surface du media de filtration.

Le cas D, mettant en oeuvre l'invention, démontre une très nette amélioration de l'efficacité de désinfection par utilisation combinée du lavage avec une solution hypersaline et par ajout d'un agent bactéricide.

Le cas A', qui reproduit les conditions du cas A, permet de confirmer la colonisation du filtre et la dégradation bactériologique de l'eau filtrée en condition de lavage sans solution hypersaline et sans agent bactéricide.

Le cas E, dont les résultats correspondent à un CT divisé par 2 par rapport au cas D, présente encore une activité bactéricide significative par rapport aux cas B et C.

**Exemple 2 : Cas de l'application à un filtre à membrane (Fig.3)**

Le procédé de désinfection a été appliqué au fonctionnement d'un système de filtration par membrane. Le système utilisé était un système à membrane immergée, mais peut tout à fait être appliqué à un système en carter pressurisé. Le système membranaire fonctionnait en filtration directe d'eau de mer, sans ajout de réactifs. Le flux de filtration appliqué durant l'essai était de 50 L/m$^2$/h. Le rétrolavage était réalisé toute les 30 minutes par contre - perméation d'eau en sens inverse du sens de filtration pendant 40 secondes. Dans le cas où on injecte 5 mg/L de chlore, le CT est donc de :

$$5 \times (40/60) \times 2 \times 24 \times 7 = 1120 \text{ min.mg/L}$$

Quatre tests ont été réalisés dans les configurations suivantes :

- W : rétrolavage périodique du filtre avec de l'eau ultrafiltrée
- X : rétrolavage périodique du filtre avec de l'eau ultrafiltrée additionnée d'un agent bactéricide, en l'occurrence du chlore à une concentration de 5 mg/L en chlore actif
- Y : rétrolavage périodique du filtre avec du concentrat d'osmose inverse à une concentration de 75 g/L en salinité totale
- Z : rétrolavage périodique du filtre avec du concentrat d'osmose inverse à une concentration de 75 g/L en salinité totale additionnée d'un agent bactéricide, en l'occurrence du chlore à une concentration de 5 mg/L en chlore actif.

Tableau 2 : Dénombrement de la flore totale.

|    | Eau d'alimentation UFC/mL | Eau ultrafiltrée UFC/mL |
|----|----|----|
| W | $10^4$ | 100 |
| X | $2. 10^4$ | 5 |
| Y | $1.5 . 10^4$ | 50 |
| Z | $2.1. 10^4$ | <1 |
| W' | $5. 10^4$ | 155 |

Dans le cas de l'ultrafiltration, la membrane retient plus de 6 log de bactéries, le seuil de coupure de la membrane, ici 0,03 microns, étant très inférieur au diamètre des cellules bactériennes. Il apparaît au cours du temps une contamination du côté perméat lorsque le rétrolavage est réalisé avec du simple perméat (cas W). Cette contamination est liée à l'intrusion de bactéries durant le rétrolavage, bactéries qui se développent du côté perméat des membranes d'UF.

L'addition d'un agent bactéricide ou l'emploi d'une solution hypersaline pour réaliser le rétrolavage des membranes permet de limiter cette contamination (cas X et Y).

Le couplage des deux solutions eau hypersaline et agent bactéricide, pour un même temps de contact, permet une très forte diminution de la contamination du perméat (cas Z).

Le cas W' correspond au cas W et permet de démontrer la recontamination du côté perméat de la membrane après un temps de fonctionnement sans solutions hypersalines ni agent bactéricide.

**Revendications**

1. Procédé de désinfection d'un ouvrage de filtration (F) pour prétraitement d'eau salée, en particulier d'eau de mer, en amont d'une unité (1) de dessalement d'eau avec membrane d'osmose inverse, selon lequel une opération de désinfection de l'ouvrage de filtration est effectuée périodiquement par addition d'un agent bactéricide à l'eau à prétraiter, l'ouvrage de filtration étant soumis périodiquement à un décolmatage, **caractérisé en ce que** :

   - l'opération de désinfection de l'ouvrage de filtration est effectuée pendant un décolmatage,
   - et le liquide utilisé pour le décolmatage est formé par une solution aqueuse de décolmatage dont la teneur en sel est différente de la teneur de l'eau à prétraiter, et l'agent bactéricide est ajouté à la solution de décolmatage en amont de son injection dans l'ouvrage de filtration.

2. Procédé selon la revendication 1, **caractérisé en ce que** la solution aqueuse de décolmatage présente une teneur en sel supérieure à celle de l'eau à traiter.

3. Procédé selon la revendication 2, **caractérisé en ce que** la solution aqueuse de décolmatage est formée par le rejet (9, B) de l'osmose inverse.

4. Procédé selon la revendication 1, **caractérisé en ce que** le décolmatage du filtre est réalisé avec une solution aqueuse dont la teneur en sel est inférieure à la teneur de l'eau à prétraiter.

**5.** Procédé selon l'une quelconque des revendications précédentes selon lequel la filtration pour le prétraitement est effectuée dans un filtre à matériaux granulaires, **caractérisé en ce que** le décolmatage correspond à une opération de lavage de l'ouvrage de filtration (2, 2a).

**6.** Procédé selon l'une quelconque des revendications 1 à 4, selon lequel la filtration pour le prétraitement est effectuée dans une unité à membrane (16, 19), **caractérisé en ce que** le décolmatage correspond à une opération de rétrolavage.

**7.** Procédé selon l'une quelconque des revendications précédentes, **caractérisé en ce que** l'agent bactéricide est choisi parmi le chlore, le dioxyde de chlore, le DBNPA ou les chloramines.

**8.** Installation pour la mise en oeuvre d'un procédé selon l'une quelconque des revendications 1 à 3, comportant un ouvrage de filtration (F) pour un prétraitement d'eau salée, en particulier d'eau de mer, une unité (1) de dessalement d'eau avec membrane d'osmose inverse située en aval de l'ouvrage de filtration, et un ensemble de conduites et de vannes pour effectuer périodiquement une opération de décolmatage de l'ouvrage de filtration, **caractérisée en ce que** :

- elle comporte une conduite de liaison (10) entre le rejet (9,B) de l'unité (1) d'osmose inverse et l'ouvrage de filtration (F), et une pompe (P), pour l'injection d'une solution de lavage plus concentrée en sel que l'eau à prétraiter,
- et un moyen d'injection (14) d'agent bactéricide dans le liquide de lavage avant son injection dans l'ouvrage de filtration.

**9.** Installation selon la revendication 8, **caractérisée en ce que** l'ouvrage de filtration pour le prétraitement est constitué d'un filtre (2, 2a) à matériaux granulaires, notamment bicouche.

**10.** Installation selon la revendication 8, **caractérisée en ce que** l'ouvrage de filtration pour le prétraitement est constitué d'une unité à membrane immergée (16), ou à membrane en carter pressurisé (19).

## Claims

**1.** Method for disinfecting a filtration works (F) for the pretreatment of salt water, particularly seawater, upstream of a water desalination unit (1) using a reverse osmosis membrane, whereby an operation of disinfecting the filtration works is carried out periodically by adding a bactericidal agent to the water that is to be pretreated, the filtration works being periodically subjected to a declogging operation, **characterized in that**:

- the operation of disinfecting the filtration works is carried out during a declogging operation,
- and the liquid used for the declogging is formed of an aqueous declogging solution the salt content of which differs from the content of the water being pretreated, and the bactericidal agent is added to the declogging solution upstream of its injection into the filtration works.

**2.** Method according to Claim 1, **characterized in that** the aqueous declogging solution has a salt content higher than that of the water being treated.

**3.** Method according to Claim 2, **characterized in that** the aqueous declogging solution is formed by the discharge (9, B) from the reverse osmosis.

**4.** Method according to Claim 1, **characterized in that** the declogging of the filter is performed using an aqueous solution the salt content of which is lower than the content of the water being pretreated.

**5.** Method according to any one of the preceding claims, in which the filtration for the pretreatment is carried out in a granular materials filter, **characterized in that** the declogging corresponds to an operation of washing the filtration works (2, 2a).

**6.** Method according to any one of Claims 1 to 4, in which the filtration for the pretreatment is carried out in a unit with a membrane (16, 19), **characterized in that** the declogging corresponds to a backwashing operation.

7. Method according to any one of the preceding claims, **characterized in that** the bactericidal agent is chosen from among chlorine, chlorine dioxide, DBNPA or chloramines.

8. Plant for implementing a method according to any one of Claims 1 to 3, comprising a filtration works (F) for a pretreatment of salt water, particularly seawater, a water desalination unit (1) with reverse osmosis membrane situated downstream of the filtration works, and a set of pipes and valves for periodically carrying out an operation of declogging the filtration works, **characterized in that**:

> - it comprises a connecting pipe (10) connecting the discharge side (9,B) of the reverse osmosis unit (1) to the filtration works (F), and a pump (P), for injecting a washing liquid that is more concentrated in salt than is the water being pretreated,
> - and a means (14) of injecting bactericidal agent into the washing liquid before it is injected into the filtration works.

9. Plant according to Claim 8, **characterized in that** the filtration works for the pretreatment consists of a granular materials filter (2, 2a), particularly a dual layer filter.

10. Plant according to Claim 8, **characterized in that** the filtration works for the pretreatment consists of a unit with a submerged membrane (16), or with a membrane in a pressurized casing (19).

**Patentansprüche**

1. Verfahren zur Desinfektion einer Filteranlage (F) für die Vorbehandlung von Salzwasser, insbesondere Meerwasser, vor einer Einheit (1) zur Wasserentsalzung mit Umkehrosmose-Membran, wonach ein Vorgang zur Desinfektion der Filteranlage durch Zugabe eines Bakterizids zu dem vorzubehandelnden Wasser periodisch durchgeführt wird, wobei die Filteranlage periodisch einer Reinigung unterzogen wird, **dadurch gekennzeichnet, dass**:

> - der Vorgang der Desinfektion der Filteranlage während der Reinigung durchgeführt wird und
> - die für die Reinigung verwendete Flüssigkeit von einer wässrigen Reinigungslösung gebildet ist, deren Salzgehalt von dem Gehalt des vorzubehandelnden Wassers abweicht, und das Bakterizid der Reinigungslösung vor ihrer Einleitung in die Filteranlage zugegeben wird.

2. Verfahren nach Anspruch 1, **dadurch gekennzeichnet, dass** die wässrige Reinigungslösung einen Salzgehalt aufweist, der höher als der des zu behandelnden Wassers ist.

3. Verfahren nach Anspruch 2, **dadurch gekennzeichnet, dass** die wässrige Reinigungslösung von dem Austrag (9, B) der Umkehrosmose gebildet ist.

4. Verfahren nach Anspruch 1, **dadurch gekennzeichnet, dass** die Reinigung des Filters mit einer wässrigen Lösung vollzogen wird, deren Salzgehalt niedriger als der Gehalt des vorzubehandelnden Wassers ist.

5. Verfahren nach einem der vorstehenden Ansprüche, wonach die Filtration für die Vorbehandlung in einem Filter mit körnigen Materialien durchgeführt wird, **dadurch gekennzeichnet, dass** die Reinigung einem Waschvorgang der Filteranlage (2, 2a) entspricht.

6. Verfahren nach einem der Ansprüche 1 bis 4, wonach die Filtration für die Vorbehandlung in einer Membraneinheit (16, 19) durchgeführt wird, **dadurch gekennzeichnet, dass** die Reinigung einem Rückspülvorgang entspricht.

7. Verfahren nach einem der vorstehenden Ansprüche, **dadurch gekennzeichnet, dass** das Bakterizid aus Chlor, Chlordioxid, DBNPA oder Chloraminen ausgewählt ist.

8. Anlage für die Durchführung eines Verfahrens nach einem der Ansprüche 1 bis 3, umfassend eine Filteranlage (F) für eine Vorbehandlung von Salzwasser, insbesondere Meerwasser, eine Einheit (1) zur Wasserentsalzung mit Umkehrosmose-Membran, die der Filteranlage nachgeordnet ist, sowie eine Anordnung von Leitungen und Ventilen zum periodischen Durchführen eines Vorgangs zur Reinigung der Filteranlage, **dadurch gekennzeichnet, dass** sie umfasst:

> - eine Verbindungsleitung (10) zwischen dem Austrag (9, B) der Umkehrosmose-Einheit (1) und der Filteranlage (F) sowie eine Pumpe (P) zum Einleiten einer Waschlösung, die eine höhere Salzkonzentration als das vorzubehandelnde Wasser aufweist, sowie
- ein Mittel zum Einleiten (14) eines Bakterizids in die Waschflüssigkeit vor ihrem Einleiten in die Filteranlage.

9. Anlage nach Anspruch 8, **dadurch gekennzeichnet, dass** die Filteranlage für die Vorbehandlung von einem Filter (2, 2a) mit körnigen Materialien, insbesondere zweischichtigen, gebildet ist.

10. Anlage nach Anspruch 8, **dadurch gekennzeichnet, dass** die Filteranlage für die Vorbehandlung von einer Einheit mit Tauchmembran (16) oder mit Membran in druckbeaufschlagtem Gehäuse (19) gebildet ist.

FIG.1

FIG.2

FIG.3

FIG.4

**RÉFÉRENCES CITÉES DANS LA DESCRIPTION**

**Documents brevets cités dans la description**

- EP 1914014 A

- FR 0611376